# EUROPEAN PATENT SPECIFICATION

(11) **EP 1 058 134 B1**
(45) Date of publication and mention of the grant of the patent: **25.11.2009**
(21) Application number: 99304311.6
(22) Date of filing: 02.06.1999
(51) Int. Cl.: G02B 5/18, G02B 27/44, G02B 27/00

(54) **Optical instrument and optical element thereof**
Optisches Instrument und optisches Element dafür
Instrument optique et son élément optique

(43) Date of publication of application: 06.12.2000
(73) Proprietor: FREEMAN, Robin John, Worplesdon, Surrey GU3 3QE (GB)
(72) Inventor: FREEMAN, Robin John, Worplesdon, Surrey GU3 3QE (GB)
(74) Representative: Boden, Keith McMurray

(56) References cited:
- WO-A-94/27177
- WO-A-97/37339
- US-A- 734 134
- US-A- 5 661 603
- US-A- 5 742 262
- PATENT ABSTRACTS OF JAPAN vol. 1996, no. 10, 31 October 1996 (1996-10-31) -& JP 08 166556 A (OLYMPUS OPTICAL CO LTD), 25 June 1996 (1996-06-25)

## Description

This invention relates to optical instruments and in particular to optical instruments having an exit pupil at which an image of an object may be viewed by an observer.

In conventional optical instruments the size of the exit pupil is determined by a function of the numerical aperture of the instrument and the overall magnification of the instrument and hence the size of the exit pupil is of fixed and relatively small dimension. Consequently it is necessary for an observer to accurately align the entrance pupil of his eye with the exit pupil of the optical instrument in order properly to view an image or otherwise receive light from the instrument.

In EP-A-0650606, I have described and claimed optical apparatus provided with an enlarged exit pupil whereby an observer is able to enjoy the freedom to receive images or light from the optical apparatus by placing his eye pupil anywhere within an enlarged exit pupil. The enlarged exit pupil is obtained by the provision of a diffractive element located at an intermediate focal or image plane of the optical instrument. The diffractive element comprises a substrate having a plurality of parallel first grooves in a surface of the substrate, edges of the first grooves being coincident and forming lines of a first diffractive grating and a plurality of parallel second grooves in the surface of the substrate, the second grooves extending perpendicular to the first grooves and edges of the second grooves being coincident and forming lines of a second diffractive grating. While a construction of diffractive element as described in EP-A-0650606 produces an enlarged exit pupil, my present invention provides an improved optical instrument having an enlarged exit pupil.

US-A-5742262 discloses a virtual retinal display which includes a pair of spaced diffraction gratings for producing an enlarged exit pupil.

US-A-734134 discloses wares having surfaces which include crossed diffraction gratings for the purpose of producing coloured light effects.

The present invention provides an optical instrument, comprising: an optical system for producing an optical image of an object, the optical image being viewable by an observer at an exit pupil; and a diffractive optical element located at an intermediate focal or image plane of the optical instrument for producing an array of a plurality of the exit pupils; wherein the diffractive optical element includes: a substrate having a surface; and at least three optical diffraction gratings in a common plane in the surface of the substrate, each optical diffraction grating comprising a set of parallel diffraction grating lines defined by continuous grooves or edges in the surface of the substrate, with the diffraction grating lines of each optical diffraction grating extending in a different angular direction relative to the diffraction grating lines of each other of the optical diffraction gratings.

An embodiment of the invention will now be described by way of example with reference to the drawings in which:-
Figure 1 shows optical elements of a microscope incorporating a diffractive element,
Figure 2 is a representation of an array of exit pupils produced in the microscope of Figure 1,
Figure 3 shows a diffractive optical element provided with three optical diffractive gratings.
Figure 4 is a view illustrating a profile of grooves forming the optical diffractive gratings,
Figure 5 is a view similar to Figure 6 but illustrating an alternative form of grooves forming the optical diffractive gratings,
Figure 6 shows a diffractive optical element similar to that shown in Figure 3 but provided with six optical diffractive gratings,
Figure 7 shows optical elements of a projection microscope utilising a transmissive diffractive element,
Figure 8 shows an alternative form of projection microscope using a reflective diffractive element.
Figure 9 shows the optical elements of a projection microscope utilising a combined Fresnel lens system and diffractive array, and
Figure 10 shows an alternative construction of the projection microscope illustrated by Figure 4.

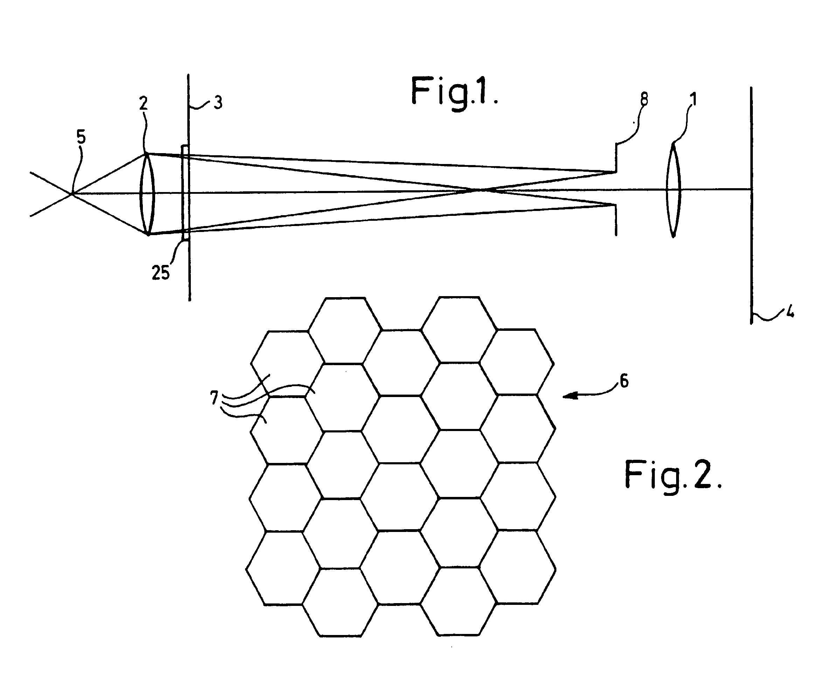

Referring first to Figure 1, a microscope includes an objective lens 1 and an eyepiece 2. The objective lens produces an intermediate image in a focal or image plane 3 of an object in an object plane 4 and, as is well known, when an eye of an observer is aligned with an exit pupil 5 of the microscope a magnified image of the intermediate image and hence of the object may be observed. The exit pupil 5 is an image of the aperture of the objective lens 1. In the microscope in accordance with the invention a transmissive diffractive element 25 is located at the intermediate focal or image plane 3 of the microscope. The diffractive element 25 is effective to cause the microscope to produce an array 6 (Figure 2) of exit pupils 7 each corresponding to the exit pupil 5 which would be formed in the absence of the diffractive element 25. By suitable choice of design of the diffractive element 25 the array of exit pupils 6 may be such that adjacent exit pupils 7 are contiguous or overlapping. It is to be understood that the representation of the array of exit pupils in Figure 2 is for the purpose of explanation and that while the exit pupils of the array may be of hexagonal shape as illustrated, the exit pupils may be of other shape or form.

If desired the aperture of the object lens may be defined by an aperture stop 8. The aperture stop 8 may be circular and the exit pupil will then also be circular. However the aperture may be of a shape which is not circular and for example may be rectangular, square or hexagonal. Accordingly the exit pupils 5, 7 are produced with a corresponding shape which may, if desired, be such that the exit pupils of the array can be located contiguous to one another with no gaps therebetween or the exit pupils overlap one another. However it will be appreciated that the location of the exit pupils relative to one another is chosen such that the array of exit pupils appears to the eye of an observer as a single continuous enlarged exit pupil.

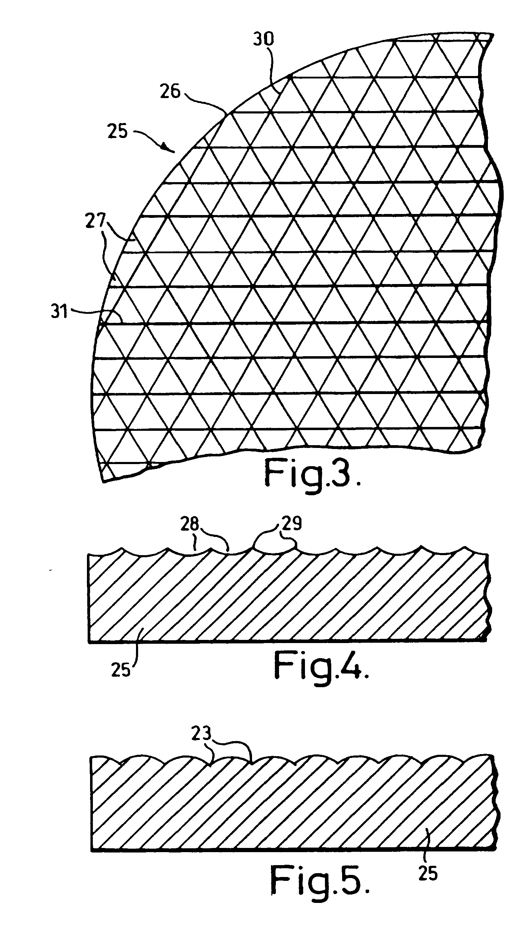

The diffractive element 25 has a surface 26 on which a plurality greater than two of optical diffractive gratings are formed. In Figure 3 the diffractive element is shown as having three optical diffractive gratings. The diffraction element 25 has a plurality of sets of parallel grooves in the surface 26 thereof, each set of parallel grooves defines diffraction lines of a respective diffractive optical grating. A first set of parallel first grooves in the surface 26 define parallel diffraction lines 27 of a first diffractive grating, second parallel grooves define parallel diffraction lines 30 of a second diffractive optical grating and third parallel grooves define parallel diffraction lines 31 of a third diffractive optical grating. The first, second and third grooves extend angularly relative to one another so that the diffraction lines of the three optical diffraction gratings respectively extend angularly relative to one another and, for example as shown in Figure 5, extend equi-angularly at 60° relative to each other. The grooves have walls 28 which may have a profile as illustrated in Figure 4. The spacing, i.e. the pitch, of the diffraction lines of the optical diffractive gratings determines the spacing of the exit pupils in the array of exit pupils. Typically the pitch of the diffraction lines of the optical diffractive gratings may be in the range of 2 - 160 microns. The angle and form of the wall 28 of the grooves determine the dispersion of light to the plurality of exit pupils and the wall of the grooves is formed such as to produce a substantially uniform dispersion of light to the plurality of exit pupils. Instead of forming grooves 28 in the surface 26 such that common edges 29 forming a diffractive optical grating lie uppermost at the surface with the grooves forming troughs between the edges as shown in Figure 4, the element 25 may be formed with an inverse formation such that diffraction lines 23 of the optical diffractive gratings are defined by deepest parts of grooves formed in the element as shown in Figure 5.

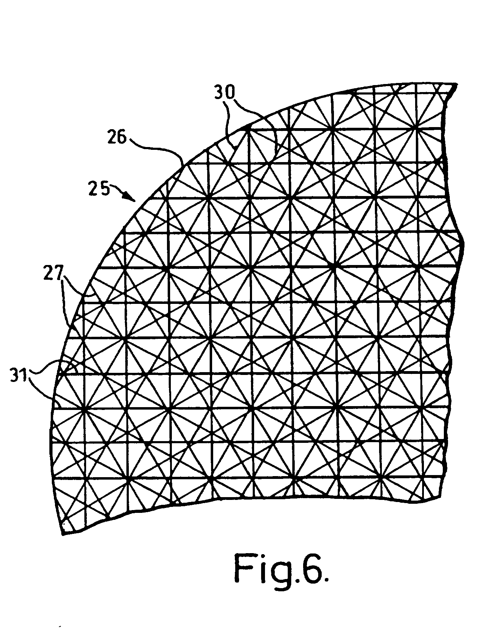

While Figure 3 illustrates a diffractive optical element 25 having three optical diffractive gratings extending equi-angularly relative to each other, a greater number of optical diffractive gratings may be provided on the diffractive optical element 25 if desired. For example, as illustrated in Figure 6, six optical diffraction gratings may be provided and it is to be understood that more than six optical diffraction gratings may be provided.

The spacing of the diffraction lines of the optical diffractive gratings may be equal or not equal as desired. Also, the cross sectional form of all of the grooves of one grating may be substantially the same or, if desired, the cross sectional form of each groove or of some grooves relative to an adjacent groove may be different to provide a required distribution of light to the exit pupils. In Figure 3 the lines of the three optical diffraction gratings are shown as extending equi-angularly and symmetrically relative to one another. Similarly in Figure 6 the lines of the optical diffractive gratings extend symmetrically relative to one another. However it is to be understood that if desired other angular relationships between diffraction lines of the optical diffraction gratings may be chosen.

It will be appreciated that when multichromatic light comprising light of a plurality of different wavelengths is acted on by an optical diffraction grating the diffraction of the light dependent upon the wavelength of the light. When it is desired to operate a microscope and other optical instruments using multichromatic light, if only two optical diffraction gratings are provided on the diffractive element as described in EP-A-0650606, colour fringing effects occur and detract from the quality ot the image formed by the instrument. The provision of a greater number than two of optical diffraction gratings as described hereinbefore decreases the observed colour fringing effects and enhances the image observed by the viewer. The colour fringing effect observed by a viewer is reduced by forming the optical diffraction gratings such as to produce an array of exit pupils in which the exit pupils of the array overlap in a plurality of directions. As a result of the overlapping of the exit pupils in the array of exit pupils, the colour fringing produced by each of the optical diffraction gratings tends to cancel and thereby reduce the observed colour fringing. This overlapping of the exit pupils of the array in a plurality of directions is achieved by the provision of more than two optical diffraction gratings and for example with the diffractive element of Figure 3 the exit pupils of the array overlap in three direction and with the diffractive element of Figure 6 the exit pupils of the array overlap in six directions.

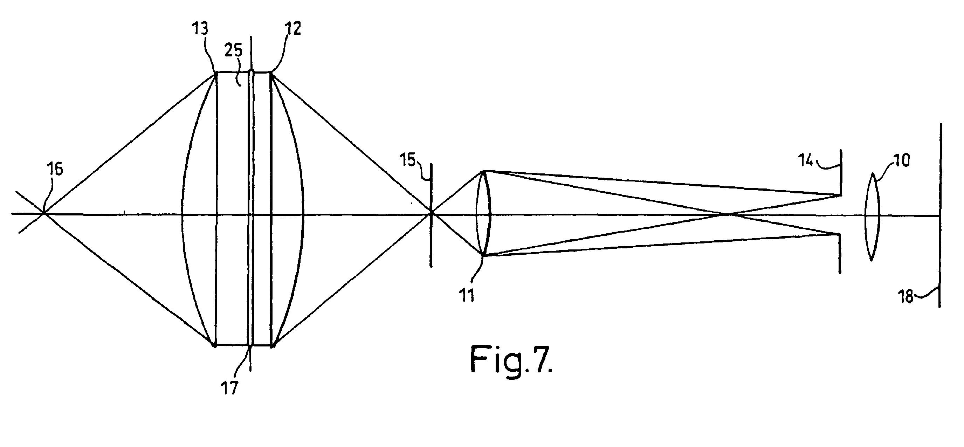

Other forms of optical instrument utilising a diffractive element to produce an enlarged exit pupil comprising an array of exit pupils will now be described with reference to Figures 7 to 10.

Figure 7 shows a projection microscope including an objective lens 10, a projection eyepiece 11 and field lenses 12, 13. In this construction of projection microscope the projection eyepiece images the aperture of the object lens 10 or, if provided, of an aperture stop 14 to form an intermediate exit pupil at an intermediate plane 15. The field lenses 12, 13 relay an image of the intermediate exit pupil at plane 15 to a final exit pupil 16 at a viewing position for an observer. The objective lens 10 and the projection eyepiece 11 form an image in a plane 17 intermediate the field lenses 12, 13 of an object in an object plane 18. A transmissive diffractive element 25 is located in the plane 17 to produce an array of images of the intermediate exit pupil in plane 15 such as to form an enlarged final exit pupil 16 at the viewing position.

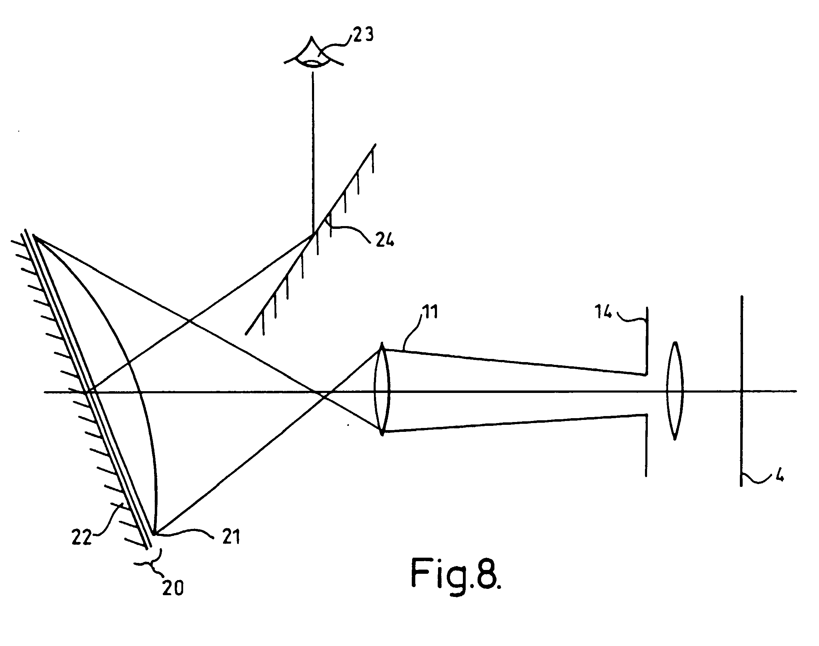

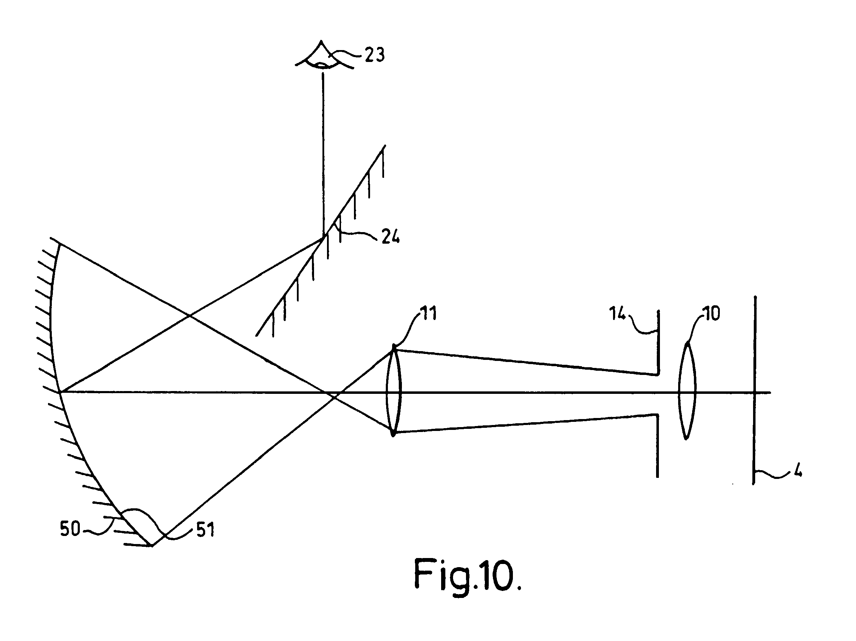

Figure 8 shows a further embodiment of projection microscope in which, instead of forming an image at a transmissive diffractive element as in the microscope shown in Figure 1 and the projection microscope shown in Figure 7, the image is formed at a reflective diffractive element 20. A single field lens 21 and a reflective element 22 is provided to form an image for viewing by an eye 23 of an observer via a mirror 24. A diffractive element 25 is provided adjacent the surface of the reflective element 22. The diffractive element 25 may be a separate element as illustrated in Figure 7 or may be integral with the reflective element 22 and be formed on the reflective surface of the reflective element 22. Instead of a field lens 21 and planar mirror 22, a concave part-spherical reflective element 50 may be provided as shown in Figure 10. The diffractive element 51 may be integral with the concave reflective element and be formed on the part-spherical concave surface of the reflective element so that the diffractive element has the form of curvature of the surface of the reflective element.

Thus it will be understood that the invention provides an optical instrument including an optical diffractive element which, when located at an intermediate image plane of the optical instrument, produces by reflective diffractive means or refractive diffractive means together with an associated field lens or mirror system, an array of exit pupils, or images of intermediate exit pupils, of the instrument at the viewing position for an eye of an observer.

In the construction of microscope illustrated in Figure 7 in which field lenses 12, 13 are provided to project the image and in the construction of microscope illustrated in Figure 8 in which a mirror and a field lens 21 are provided to project the image, the field lenses need to be at least as large as the image field. This presents disadvantages in respect of cost and weight of the instrument and where larger fields of view are required it becomes impractical to manufacture the size of field lenses required. In order to overcome these disadvantages Fresnel lenses may be utilised in place of the refractive field lenses. Instead of forming a conventional circular Fresnel lens the required optical characteristic of a circular Fresnel lens is provided by means of a plurality of cylindrical Fresnel lenses disposed angularly relative to each other. Each cylindrical Fresnel lens is formed as a pattern of parallel prismatic strips. The cylindrical Fresnel lenses in combination act optically as a conventional circular lens. As described hereinbefore a pattern of a plurality of sets of parallel diffraction lines is utilised to generate an array of exit pupils. The surfaces of the prismatic strips forming the Fresnel lenses are modified as compared with a conventional Fresnel lens by forming thereon the lines of optical diffractive gratings.

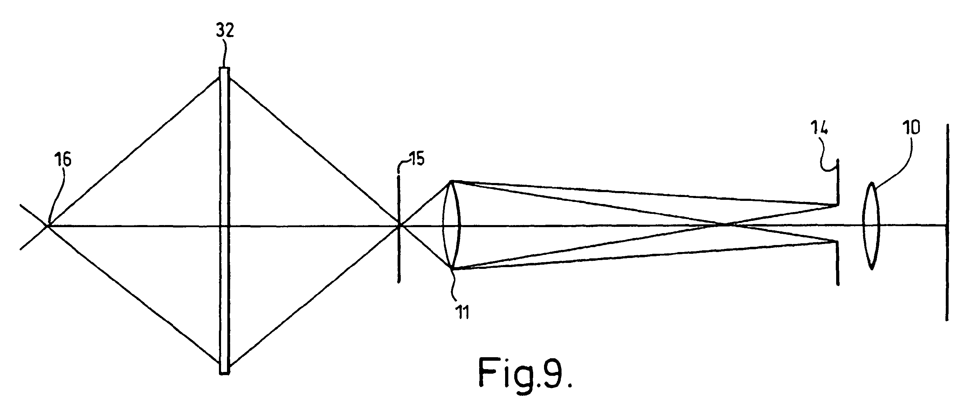

Figure 9 is similar to Figure 7 and illustrates a projection microscope but a single optical element 32 performs the functions of the field lens system 12, 13 (Figure 7) and of the diffractive element 25 (Figure 7) to generate an array of a plurality of exit pupils. Such an element is of less weight and may be manufactured economically.

It is preferred to form the first and second cylindrical Fresnel lenses in a common surface of a substrate but if desired the first and second cylindrical Fresnel lenses may be formed on different surfaces which in the microscope extend parallel to one another. For example, one lens pattern may be formed on one surface of a substrate and the other lens pattern may be formed on an opposite surface of the substrate.

It is envisaged that usually the diffractive element would remain stationary relative to the other optical elements of the optical instrument. However in some instances it may be desirable to move the diffractive element relative to the other optical elements of the optical instrument for example by rotation of the diffractive element about an axis perpendicular to the plane of the element, or in the case of a concave part-spherical element, about a central axis of the element. Such rotation may be effected by providing an electric motor and a drive transmission from the motor to the diffractive element.

Hereinbefore the invention has been described in relation to microscopes however it is to be understood that the invention is not limited to microscopes and may be utilised to produce enlarged exit pupils for other forms of optical instrument or apparatus.

As mentioned hereinbefore, the diffractive element 25 may be a separate element or may be formed integrally with another optical element such as a lens or mirror of the optical apparatus. When the diffractive element is formed integrally with another optical element such as a lens or mirror, the grooves and the lines comprising the diffractive grating are formed on a surface of the other optical element. This may conveniently be effected by depositing a layer of material on a surface of the optical element and then cutting or otherwise forming the grooves in the deposited layer.

It is to be understood that where reference is made in the specification to a lens, mirror or other optical element such element may comprise a single optical element or a compound optical element consisting of a combination of elements.

## Claims

1. An optical instrument, comprising:
an optical system for producing an optical image of an object, the optical image being viewable by an observer at an exit pupil (7); and
a diffractive optical element (25) located at an intermediate focal or image plane (3, 17) of the optical instrument for producing an array (6) of a plurality of the exit pupils (7);
wherein the diffractive optical element (25) includes:
a substrate having a surface (26); and
at least three optical diffraction gratings in a common plane in the surface (26) of the substrate, each optical diffraction grating comprising a set of parallel diffraction grating lines (27, 30, 31) defined by continuous grooves or edges (23, 29) in the surface (26) of the substrate, with the diffraction grating lines (27, 30, 31) of each optical diffraction grating extending in a different angular direction relative to the diffraction grating lines (27, 30, 31) of each other of the optical diffraction gratings.

2. The optical instrument as claimed in claim 1, wherein the diffraction grating lines (27, 30, 31) of each optical diffraction grating are disposed symmetrically relative to each other.

3. The optical instrument as claimed in claim 1 or 2, wherein the diffraction grating lines (27, 30, 31) of each optical diffraction grating are disposed equi-angularly relative to one another.

4. The optical instrument as claimed in any of claims 1 to 3, wherein the substance is optically transmissive.

5. The optical instrument as claimed in any of claims 1 to 3, wherein the substrate is optically reflective.

6. The optical instrument as claimed in any of claims 1 to 3, wherein the substrate is a cylindrical Fresnel lens (32).

7. The optical instrument as claimed in any of claims 1 to 6, wherein the optical diffraction gratings are effective to produce the exit pupils (7) of the array of exit pupils (6) in overlapping relationship.

8. The optical instrument as claimed in any of claims 1 to 7, wherein the diffractive optical element (25) is formed on or integral with a surface of another optical element (22).

9. The optical instrument as claimed in any of claims 1 to 7, wherein the optical system comprises an objective lens (1) for producing an image of the object in an image plane (3), and an eyepiece lens (2) for producing a magnified image of the image viewable at the exit pupil (7), and the optical diffraction gratings (27, 30, 31) of the diffractive optical element (25) are located in the image plane (3) for producing the array of the exit pupils (6) so located relative to one another as to be perceivable by an eye of the observer as a single, continuous enlarged exit pupil.

10. The optical instrument as claimed in any of claims 1 to 7, wherein the optical system comprises a first, objective lens (10), a second, eyepiece lens (11) for producing an aperture image of an aperture (14) of the objective lens (10) viewable at a first exit pupil, and an optical field system for receiving an optical image of the image produced by the objective and eyepiece lenses (10, 11) at an image plane (17) and relaying the aperture image to a second exit pupil (7), the optical image being viewable by an observer at the second exit pupil (7), wherein the optical field system includes the diffractive optical element (25) for producing an array (6) of a plurality of the second exit pupils (7).

11. The optical instrument as claimed in claim 10, wherein the diffractive optical element (25) is integral with a surface of one element (12) of the optical field system.

12. The optical instrument as claimed in any of claims 1 to 11, wherein walls of the grooves or edges (23, 29) defining the optical diffraction gratings have a profile effective to distribute light energy substantially uniformly to the exit pupils (7) in the array of exit pupils (6).

13. The optical instrument as claimed in any of claims 1 to 12, wherein the optical instrument is a microscope.

14. The optical instrument as claimed in claim 13, wherein the optical instrument is a projection microscope.

## Patentansprüche

1. Optisches Instrument mit:
einem optischen System zur Erzeugung eines optischen Bildes von einem Objekt, wobei das optische Bild von einem Betrachter bei einer Austrittsblende (7) betrachtet werden kann; und
einem beugenden optischen Bauteil (25), das an einer dazwischen liegenden Brennebene oder an einer Bildebene (3, 17) des optischen Systems angebracht ist, um eine Anordnung (6) von einer Anzahl von den Austrittsblenden (7) zu erzeugen;
wobei das beugende optische Bauteil (25) umfasst:
eine Basisplatte mit einer Oberfläche (26); und
mindestens drei optische Beugungsgitter in einer gemeinsamen Ebene in der Oberfläche (26) der Basisplatte, wobei jedes optisches Beugungsgitter einen Satz von parallelen Beugungsgitterlinien (27, 30, 31) aufweist, die durch durchgehende Rillen oder Kanten (23, 29) in der Oberfläche (26) der Basisplatte bestimmt sind, wobei sich die Beugungsgitterlinien (27, 30, 31) von jedem optischen Beugungsgitter in verschiedene Winkelrichtungen in Bezug zu den Beugungsgitterlinien (27, 30, 31) von jedem anderem der optischen Beugungsgitter erstrecken.

2. Optisches Instrument nach Anspruch 1, wobei die Beugungsgitterlinien (27, 30, 31) von jedem optischen Beugungsgitter symmetrisch in Bezug zueinander angeordnet sind.

3. Optisches Instrument nach Anspruch 1 oder 2, wobei die Beugungsgitterlinien (27, 30, 31) von jedem optischen Beugungsgitter gleichwinkelig in Bezug zueinander angeordnet sind.

4. Optisches Instrument nach einem der Ansprüche 1 bis 3, wobei die Basisplatte optisch durchlässig ist.

5. Optisches Instrument nach einem der Ansprüche 1 bis 3, wobei die Basisplatte optisch spiegelnd ist.

6. Optisches Instrument nach einem der Ansprüche 1 bis 3, wobei die Basisplatte eine zylindrische Fresnelsche Linse (32) ist.

7. Optisches Instrument nach einem der Ansprüche 1 bis 6, wobei die optischen Beugungsgitter dazu dienen, die Austrittsblenden (7) von der Anordnung der Austrittsblenden (6) in einer überlappenden Beziehung zu erzeugen.

8. Optisches Instrument nach einem der Ansprüche 1 bis 7, wobei das beugende optische Bauteil (25) auf einer Oberfläche eines anderen optischen Bauteiles (22) oder zusammen mit der Oberfläche des anderen optischen Bauteiles gebildet ist.

9. Optisches Instrument nach einem der Ansprüche 1 bis 7, wobei das optische System eine Objektivlinse (1) zur Erzeugung eines Bildes von dem Objekt in einer Bildebene (3) und eine Augenlinse (2) zur Erzeugung eines vergrößerten Bildes von dem Bild, das an der Austrittsblende (7) betrachtet werden kann, umfasst, wobei die Beugungsgitterlinien (27, 30, 31) des beugenden optischen Bauteiles (25) in der Bildebene (3) angeordnet sind, um die Anordnung der Austrittsblenden (6) zu erzeugen, wobei sie so in Bezug zueinander angeordnet sind, dass sie von einem Auge des Betrachters als eine einzelne, durchgehende und vergrößerte Austrittsblende wahrgenommen werden können.

10. Optisches Instrument nach einem der Ansprüche 1 bis 7, wobei das optische System eine erste Objektivlinse (10), eine zweite Augenlinse (11) zur Erzeugung eines Aperturbildes von einer Apertur (14) der Objektivlinse (10), das von der ersten Austrittsblende betrachtet werden kann, und ein System des optischen Feldes umfasst, um ein optisches Bild von dem Bild zu empfangen, das von der Objektivlinse (10) und der Augenlinse (11) bei einer Bildebene (17) erzeugt worden ist, und um das Aperturbild an eine zweite Austrittsblende (7) weiterzugeben, wobei das optische Bild von einem Betrachter bei der zweiten Austrittsblende (7) betrachtet werden kann, und wobei das System des optischen Feldes das beugende optische Bauteil (25) umfasst, um eine Anordnung (6) einer Anzahl der zweiten Austrittsblenden (7) zu erzeugen.

11. Optisches Instrument nach Anspruch 10, wobei das beugende optische Bauteil (25) zusammen mit einer Oberfläche von einem Bauteil (12) des Systems des optischen Feldes gebildet ist.

12. Optisches Instrument nach einem der Ansprüche 1 bis 11, wobei Wände der Rillen oder der Kanten (23, 29), die die optischen Beugungsgitter bestimmen, eine Form aufweisen, die dazu dient, die Lichtenergie im Wesentlichen gleichförmig an die Austrittsblenden (7) in der Anordnung der Austrittsblenden (6) zu verteilen.

13. Optisches Instrument nach einem der Ansprüche 1 bis 12, wobei das optische Instrument ein Mikroskop ist.

14. Optisches Instrument nach Anspruch 13, wobei das optische Instrument ein Projektionsmikroskop ist.

## Revendications

1. Instrument optique, comprenant :
un système optique destiné à produire une image optique d'un objet, l'image optique pouvant être vue par un observateur à une pupille de sortie (7) ; et
un élément optique de diffraction (25) situé à un plan focal ou image intermédiaire (3, 17) de l'instrument optique pour produire une série (6) d'une pluralité des pupilles de sortie (7) ;
dans lequel l'élément optique de diffraction (25) comprend :
un substrat comportant une surface (26) ; et
au moins trois réseaux de diffraction optiques dans un plan commun dans la surface (26) du substrat, chaque réseau de diffraction optique comprenant un jeu de lignes parallèles de réseau de diffraction (27, 30, 31) définies par des rainures ou bords continus (23, 29) dans la surface (26) du substrat, les lignes de réseau de diffraction (27, 30, 31) de chaque réseau de diffraction optique s'étendant dans une direction angulaire différente par rapport aux lignes de réseau de diffraction (27, 30, 31) de chaque autre des réseaux de diffraction optiques.

2. Instrument optique selon la revendication 1, dans lequel les lignes de réseau de diffraction (27, 30, 31) de chaque réseau de diffraction optique sont disposées symétriquement les unes par rapport aux autres.

3. Instrument optique selon la revendication 1 ou 2, dans lequel les lignes de réseau de diffraction (27, 30, 31) de chaque réseau de diffraction optique sont disposées de façon équi-angulaire les unes par rapport aux autres.

4. Instrument optique selon une quelconque des revendications 1 à 3, dans lequel la substance est optiquement transmissive.

5. Instrument optique selon une quelconque des revendications 1 à 3, dans lequel le substrat est optiquement réfléchissant.

6. Instrument optique selon une quelconque des revendications 1 à 3, dans lequel le substrat est une lentille de Fresnel cylindrique (32).

7. Instrument optique selon une quelconque des revendications 1 à 6, dans lequel les réseaux de diffraction optiques sont efficaces pour produire les pupilles de sortie (7) de la série de pupilles de sortie (6) dans une relation de chevauchement.

8. Instrument optique selon une quelconque des revendications 1 à 7, dans lequel l'élément optique de diffraction (25) est formé sur ou intégré avec une surface d'un autre élément optique (22).

9. Instrument optique selon une quelconque des revendications 1 à 7, dans lequel le système optique comprend une lentille d'objectif (1) destinée à produire une image de l'objet dans un plan image (3), et une lentille oculaire (2) destinée à produire une image agrandie de l'image pouvant être vue à la pupille de sortie (7), et les réseaux de diffraction optiques (27, 30, 31) de l'élément optique de diffraction (25) sont situés dans le plan image (3) pour produire la série des pupilles de sortie (6) ainsi situées les unes par rapport aux autres afin de pouvoir être perçues par un oeil de l'observateur sous forme de pupille de sortie agrandie continue unique.

10. Instrument optique selon une quelconque des revendications 1 à 7, dans lequel le système optique comprend une première lentille d'objectif (10), une seconde lentille oculaire (11) destinée à produire une image d'ouverture d'une ouverture (14) de la lentille d'objectif (10) pouvant être vue à une première pupille de sortie, et un système de champ optique destiné à recevoir une image optique de l'image produite par les lentilles d'objectif et oculaire (10, 11) à un plan image (17) et à relayer l'image d'ouverture à une seconde pupille de sortie (7), l'image optique pouvant être vue par un observateur à la seconde pupille de sortie (7), dans lequel le système de champ optique comprend l'élément optique de diffraction (25) pour produire une série (6) d'une pluralité des secondes pupilles de sortie (7).

11. Instrument optique selon la revendication 10, dans lequel l'élément optique de diffraction (25) est intégré avec une surface d'un élément (12) du système de champ optique.

12. Instrument optique selon une quelconque des revendications 1 à 11, dans lequel des parois des rainures ou bords (23, 29) définissant les réseaux de diffraction optiques possèdent un profil efficace pour distribuer de l'énergie lumineuse sensiblement uniformément aux pupilles de sortie (7) dans la série de pupilles de sortie (6).

13. Instrument optique selon une quelconque des revendications 1 à 12, dans lequel l'instrument optique est un microscope.

14. Instrument optique selon la revendication 13, dans lequel l'instrument optique est un microscope projecteur.
